# FASCICULE DE BREVET EUROPEEN

(11) **EP 1 575 336 B1**
(45) Date de publication et mention de la délivrance du brevet: **27.01.2010**
(21) Numéro de dépôt: 05004635.8
(22) Date de dépôt: 03.03.2005
(51) Int. Cl.: H05B 6/12

(54) **Module d'assemblage de bobines d'induction d'une zone de cuisson par chauffage par induction et zone de cuisson comprenant lesdits modules**
Zusammensetzungsmodul von Induktionsspulen einer Induktionskochzone und Kochzone ausgestattet mit solchem Modul
Assembling module of induction coils of a induction heating cooking area and cooking area including the said modules

(30) Priorité: 12.03.2004 FR 0402564
(43) Date de publication de la demande: 14.09.2005
(73) Titulaire: FagorBrandt SAS, 92500 Rueil Malmaison (FR)
(72) Inventeur: Fournier, Dominique, 45750 Saint Pryvé Saint Mesmin (FR); Marliot, Eric, 41220 La Ferté Saint Cyr (FR); Roux, Alain, 45160 Saint Hilaire Saint Mesmin (FR)

(56) Documents cités:
- DE-A- 10 163 839
- GB-A- 2 389 767
- US-A- 4 415 788
- US-A- 4 431 892
- US-A- 4 665 893

## Description

L'invention se rapporte à une zone de cuisson par chauffage par induction comprenant des modules d'assemblage de bobines d'induction.

Plus précisément l'invention se rapporte à une zone de cuisson, permettant de chauffer par induction au moins un récipient de cuisson placé sur une plaque support amagnétique constituant le dessus de la zone de cuisson, ladite zone de cuisson comportant au moins deux bobines d'induction placées sous la plaque support et reliées à des générateurs indépendants.

Le brevet français publié sous le numéro 2 758 934 décrit une zone de cuisson constituée d'au moins deux bobines d'induction standards, alimentées chacune par un générateur standard de sorte qu'un récipient puisse être placé sur la zone de cuisson en recouvrant au moins partiellement les bobines d'induction. Une zone de cuisson telle que décrite dans ce brevet reste complexe à fabriquer, en particulier lorsqu'il s'agit de placer un grand nombre de bobines d'induction pour couvrir la zone de cuisson. En effet, chaque bobine d'induction est positionnée indépendamment ce qui complexifie le montage et peut entraîner une mauvaise répartition du champ magnétique sur la zone de cuisson.

Le brevet US4665893 décrit une zone de cuisson réalisée à partir de modules rectangulaires supportant deux bobines à induction, l'électronique permettant d'alimenter les bobines et une ventilation. Chaque module a ainsi un fonctionnement autonome. Toutefois, l'assemblage de ces modules est contraignant dans la mesure où il ne permet pas de construire de zones de cuisson de forme variées, et où la répartition du champ magnétique résultant n'est pas régulière.

La présente invention a pour but de proposer une zone de cuisson qui améliore les dispositifs connus en proposant un moyen d'assemblage des bobines d'induction sous la plaque support amagnétique en constituant une structure modulaire permettant de construire des formes et tailles variées de zone de cuisson, tout en facilitant le montage de la table et garantissant une répartition du champ magnétique régulière, le tout compatible avec une fabrication en grande série.

A cet effet, la présente invention vise, dans un premier aspect, une zone de cuisson permettant de chauffer par induction au moins un récipient de cuisson placé sur une plaque support magnétique, par exemple en vitrocéramique, constituant le dessus de la zone de cuisson, ladite zone de cuisson comportant au moins deux bobines d'induction reliées à des générateurs, lesdites bobines d'induction étant regroupées par modules d'au moins deux bobines d'induction, et fixées sur un même support. Chaque support est dimensionné pour que l'écart entre deux bobines d'induction voisines et portées par des supports distincts, soit le même qu'entre deux bobines d'induction voisines et portées par un même support.

Une zone de cuisson comprenant ces modules peut ainsi être fabriquée facilement et peut avoir des formes très variées.

La zone de cuisson est **caractérisée en ce que** chaque support comprend une zone médiane concave dont le rayon de courbure maximal est égal au rayon extérieur de l'extrémité du module.

Ainsi, l'imbrication des modules entre eux est possible et le pavage de la zone de cuisson utilisant ces modules est régulier. Le champ magnétique généré possède alors une géométrie régulière et homogène sur toute la surface de cuisson.

Selon une caractéristique préférée de l'invention des éléments conducteurs magnétiques, préférentiellement des ferrites, sont placés sous chaque bobine d'induction et sont portés par le même support que ladite bobine d'induction.

De ce fait, les éléments conducteurs magnétiques qui canalisent les lignes de champ magnétique sont placés simplement sous chaque bobine d'induction et ceux-ci peuvent être pré-montés complètement avant l'assemblage final de la zone de cuisson.

Dans un mode de réalisation préféré, la zone de cuisson est **caractérisée en ce que** chaque module comporte un moyen de mesure de la température du récipient recouvrant au moins partiellement le module.

Dans un mode de réalisation préféré, la zone de cuisson est **caractérisée en ce que** le moyen de mesure de température comporte un capteur de température délivrant une mesure de la température et un conducteur de la chaleur placé en contact thermique avec le capteur de température et qui s'étend au-dessus de chaque bobine d'induction.

Dans un mode de réalisation préféré, la zone de cuisson est caractérisée en ce que chaque bobine d'induction a un diamètre extérieur compris entre 60 mm et 100 mm.
Dans un mode de réalisation préféré, la zone de cuisson est caractérisée en ce que le centre de chaque bobine d'induction est espacé du centre de chaque bobine d'induction voisine d'une distance comprise en 65 mm et 105 mm.
Dans un mode de réalisation préféré, la zone de cuisson est caractérisée en ce que la distance entre chaque bobine d'induction voisine est constante sur toute la zone de cuisson.
Dans un mode de réalisation préféré, la zone de cuisson est caractérisée en ce qu'elle comprend au moins une plaque d'assemblage sur laquelle est fixée au moins un module, de sorte que l'équidistance entre chaque bobine d'induction voisine soit garantie.
Dans un mode de réalisation préféré, la zone de cuisson est caractérisée en ce que chaque plaque d'assemblage est munie de trous de positionnement dans lesquels se placent les plots correspondants sur les supports des modules.
Dans un mode de réalisation préféré, la zone de cuisson est caractérisée en ce que chaque plaque d'assemblage est liée à au moins une plaque voisine par un moyen de liaison garantissant l'équidistance entre chaque bobine d'induction voisine.
Dans un mode de réalisation préféré, la zone de cuisson est caractérisée en ce que les modules sont constitués de trois bobines d'induction disposées en triangle équilatéral.
Préférentiellement, le capteur de température du module est placé au centre du triangle équilatéral formé par les centres des bobines d'induction.
Dans un mode de réalisation préféré, la zone de cuisson est caractérisée en ce que ladite zone de cuisson comprend uniquement des modules de trois bobines d'induction.

D'autres caractéristiques et avantages de l'invention ressortiront de la description qui va suivre, donnée à titre d'exemple non limitatif, en référence aux dessins annexés dans lesquels :
- La figure 1 est une vue en perspective simplifiée d'un module constitué de deux bobines d'induction et d'un support ;
- La figure 2 est une vue en perspective simplifiée de l'assemblage de deux modules de deux bobines d'induction ;
- La figure 3 est une vue en plan de l'assemblage de deux modules ;
- La figure 4 est une vue en perspective d'un module de deux bobines d'induction associées à leur dispositif de mesure de température ;
- La figure 5 est une vue en perspective d'un module constitué de trois bobines d'induction et d'un support ;
- La figure 6 est une vue en perspective d'un module de trois bobines d'induction avec leur dispositif de mesure de température ;
- La figure 7 est une vue en perspective de la face supérieure du support d'un module à trois bobines d'induction ;
- La figure 8 est une vue en perspective de la face inférieure du support d'un module à trois bobines d'induction ;
- La figure 9 est une vue en perspective d'un module de trois bobines d'induction de forme alternative ;
- La figure 10 est une vue en perspective d'un module de quatre bobines d'induction ;
- La figure 11 est une vue en plan d'un support d'assemblage sur lequel sont placés deux supports de module ;
- La figure 12 est une vue en coupe de l'assemblage de deux modules ;
- La figure 13 est une vue en coupe de l'assemblage de deux plaques d'assemblage ; et
- Les figures 14 à 16 sont des exemples de disposition des modules entre eux pour réaliser la zone de cuisson.

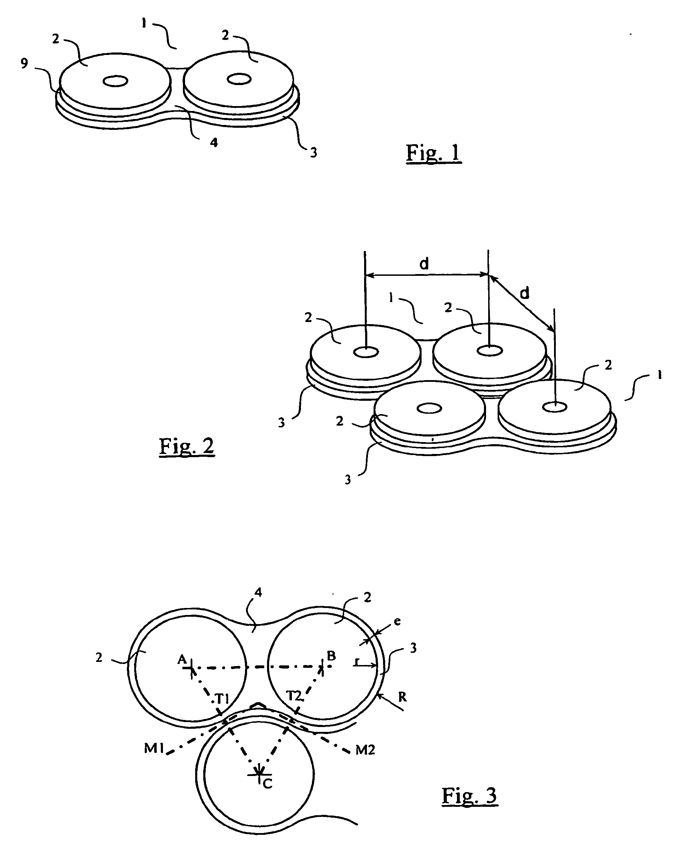

La figure 1 est une vue en perspective simplifiée d'un module 1 comprenant deux bobines d'induction 2 classiquement réalisé par un enroulement en spirale de fils de cuivre et d'un support de module 3. La bobine d'induction 2 est fixée sur le support 3 préférentiellement avec un procédé de collage. Afin de toujours fixer la bobine d'induction 2 à une place bien définie, un emplacement en creux 9 est prévu pour chaque bobine d'induction 2 dans le support 3. Ainsi le montage des bobines d'induction 2 sur le support 3 est facilité et les distances entre chaque bobine d'induction 2 d'un même module 1 sont constantes.
Le pourtour en « 8 » obtenu contient une partie médiane 4 concave permettant le positionnement d'un autre module 1 à proximité du premier tout en maintenant une distance constante entre les centres des bobines d'induction 2.

La figure 2 montre l'agencement de deux modules 1 de deux bobines d'induction 2 de telle sorte que la partie convexe d'un des deux modules 1 corresponde à la partie concave de l'autre. Dans cette configuration les deux modules 1 peuvent être placés au plus près l'un de l'autre ce qui permet de garantir une distance d constante entre chaque bobine d'induction 2 : il est possible de placer les centres des bobines d'induction 2 sur les sommets d'un losange dont les côtés ont une longueur égale à la distance entre les centres de deux bobines d'induction 2 sur un même support 3.

La figure 3 montre la géométrie de la partie médiane 4 pour que ce positionnement soit possible. Soient A et B les centres de deux bobines d'induction 2 voisines placées sur un premier support 3. Soit C le centre d'une bobine d'induction 2 voisine, issue d'un second support 3. Si l'on considère les segments de droite [CA] et [CB], il est possible de définir leurs médiatrices M1 et M2 qui passent par les points T1 et T2 respectivement milieux de [CA] et [CB]. On notera que T1 étant le milieu de [CA] et T2 le milieu de [CB] et la distance CA étant égale à la distance CB, les quatre distances CT1, AT1, CT2 et BT2 sont égales entre elles et supérieures ou égales à la valeur R du rayon de courbure de la partie externe du support 3 d'un module 1. La zone concave de la partie médiane 4 d'un premier support 3 est définie entre les deux points T1 et T2. La matière formant ce premier support 3 peut remplir une zone ne dépassant pas un arc de cercle ayant : pour extrémités les point T1 et T2, pour centre le point C et pour rayon la distance R. Afin de faciliter le montage et tenir compte des jeux d'assemblage des différents composants, un espace minimum est défini entre les deux modules 1 dans la zone concave située entre les deux points T1 et T2. Préférentiellement, cet espace est de 1mm.

Volontairement, la forme du support 3 dépasse du contour des bobines d'induction 2 tout en suivant à une distance e constante le bord des bobines d'induction 2 sur les parties extrêmes du support 3. Donc le rayon R que l'on a défini plus haut est supérieur au rayon r d'une bobine d'induction. Ainsi le maintien et la protection mécanique des bobines d'induction sont assurés tout en laissant une grande liberté de positionnement de ces modules 1.
Préférentiellement le support 3 est en matériau composite résistant à la chaleur, par exemple une résine polyester chargée fibre de verre, et l'épaisseur e et comprise entre 0,5 et 2 mm, et de façon préférée égale à 1 mm.

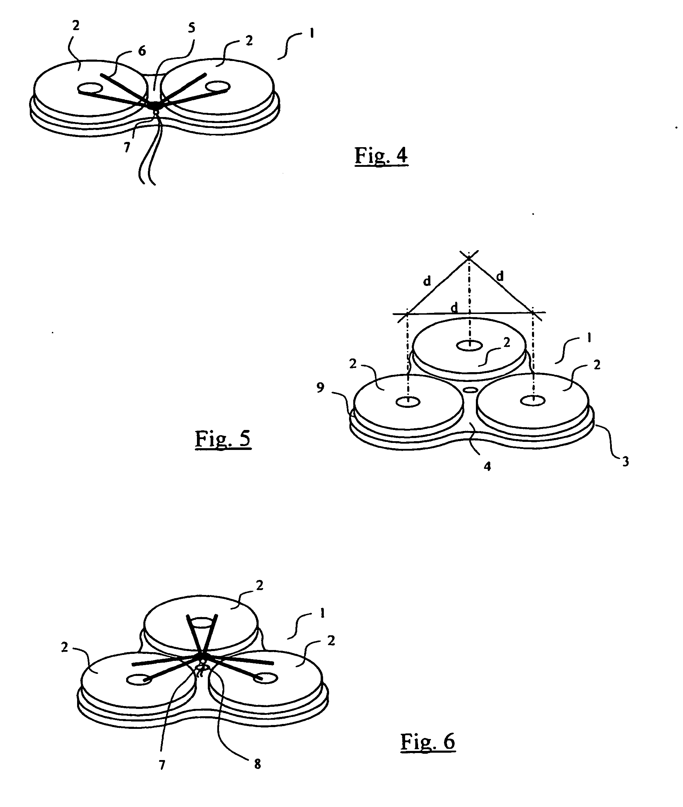

La figure 4 montre un module 1 avec son dispositif de mesure de température 5. En effet, il est classiquement utile de mesurer la température au-dessus des bobines d'induction 2 pour prévenir toute surchauffe des récipients. Habituellement chaque bobine d'induction 2 possède son dispositif de mesure de température 5, mais, dans le cas de l'invention, un même capteur 7, en l'occurrence une CTN, sert à mesurer la température de fond de récipient chauffé par l'une ou par les deux bobines d'induction grâce à un conducteur de la chaleur 6 qui s'étend au-dessus des deux bobines d'induction 2. De préférence, ce conducteur de chaleur 6 est une lame plate en aluminium dont les ramifications s'étendent au-dessus des bobines d'induction 2 dans une direction sensiblement perpendiculaire aux spires de la bobine d'induction. Le dispositif de mesure de température 5 est en contact thermique avec la plaque 20 de matériau amagnétique supportant les récipients et isolé thermiquement de la bobine d'induction 2 afin qu'il ne soit pas influencé par la température de la bobine d'induction 2.

Dans un mode préféré de l'invention illustré à la figure 5 le module 1 utilisé est un module 1 comprenant trois bobines d'induction 2 et un support 3 en forme de trèfle. Les centres des bobines d'induction 2 sont disposés sur les sommets d'un triangle équilatéral dont les côtés ont une longueur d. Tout comme pour le module 1 à deux bobines d'induction 2, chaque bobine d'induction 2 a son emplacement 9 en creux sur le support 3 et est collé à celui-ci. De la même manière, la forme extérieure du support 3 dépasse des bobines d'induction 2 d'une épaisseur e sur les zones extrêmes du support 3 et les zones médianes 4 entre chaque bobine d'induction présentent une concavité dont l'arc de cercle, définit comme pour le module 1 à deux bobines d'induction 2, constitue la limite de présence de la matière. Bien entendu, toutes les formes de partie médiane 4 du support 3 ne dépassant pas de cet arc de cercle sont compatibles avec l'invention.

La figure 6 montre un module 1 à trois bobines d'induction 2 muni de son dispositif de mesure de la température 5 comprenant une par exemple une CTN 7 au centre et d'un conducteur de chaleur 6 rapporté au-dessus dont les ramifications s'étendent au-dessus des bobines d'induction 2. Un trou central 8 est aménagé dans le support 3 pour placer la CTN 7 et ses fils de connexion. Alternativement, la CTN 7 peut être placée au centre d'une des bobines d'induction 2 du module 1, le conducteur de chaleur 6 ayant une forme qui lui permet de s'étendre au-dessus de chaque bobine d'induction 2 (non représenté).

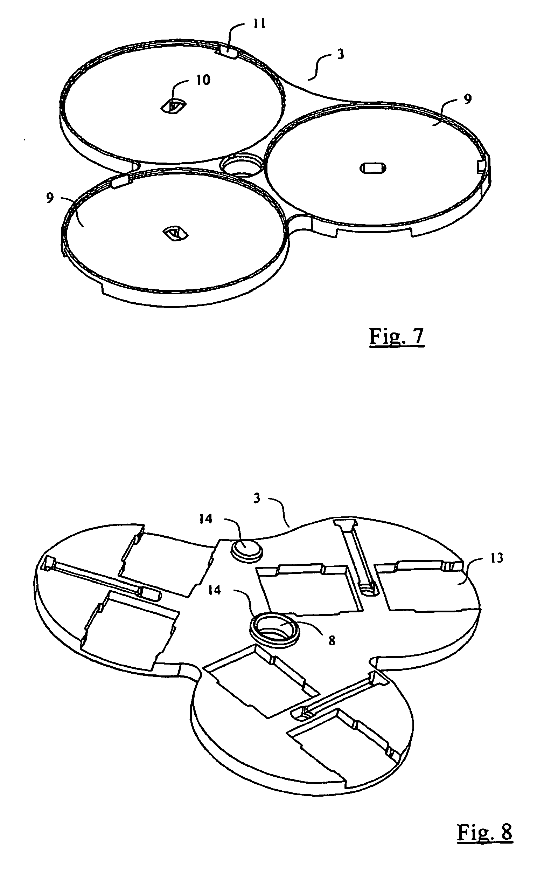

Une vue précise du mode de réalisation du module 1 à 3 bobines d'induction 2 est donnée aux figures 7 et 8.

A la figure 7, est donnée une vue de la face supérieure d'un support 3 de ces modules 1. Trois emplacements 9 sont ménagés dans le support 3. Ceux-ci ont une profondeur d'environ 2 mm et un diamètre de sensiblement 85 mm. Les bobines d'induction 2 qui seront placées dans ces emplacements 9 ont un diamètre de 84 mm. Le fil central de connexion de la bobine d'induction 2 passe dans le trou 10 pour être relié au générateur situé dessous, pendant que le fil de connexion extérieur passe dans un trou 11 ménagé sur le bord du support pour être lui aussi connecté au générateur.
Afin de maintenir une distance d constante sensiblement égale à 89 mm, l'épaisseur de matière située entre deux bobines d'induction 2 d'un même support 3 est sensiblement de 3 mm.

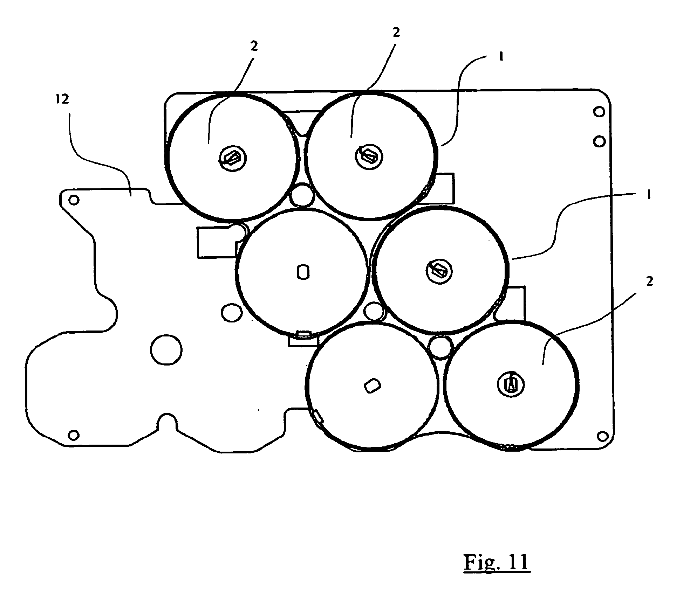

La figure 8 donne une vue de la face inférieure d'un support 3 intégré dans les modules 1 suivant l'invention. Au moins un plot 14 est placé sur cette face pour permettre le positionnement du module 1 sur une plaque support 12 telle que représentée à la figure 11. En effet, chaque plot 14 se place dans un trou correspondant de la plaque support 12 assurant ainsi le placement du module 1 sur la zone de cuisson. Préférentiellement les plots 14 sont au nombre de deux sous chaque support 3 de module 1 et, afin de faciliter la fabrication de ce support 3, l'un de ces deux plots 14 est préférentiellement situé au centre du module 1 en correspondance avec le trou 8 de passage des fils de connexion de la CTN 7. Le deuxième plot 14 est situé n'importe où sur la surface inférieure du support 3, mais pour faciliter la fabrication dudit support 3 en matière plastique moulée il sera placé préférentiellement au niveau d'une partie médiane du support. Le fait d'avoir deux plots 14 de positionnement permet de placer et d'orienter facilement les modules 1 sur la zone de cuisson.
D'autres emplacements 13 peuvent être ménagés sur la face inférieure du support 3 pour placer les éléments conducteurs magnétiques (non représentés) au droit des bobines d'induction 2. Ces éléments conducteurs magnétiques sont classiquement utilisés pour canaliser les lignes de champ émises par les bobines d'induction 2 dans la partie inférieure du module 1. De la même manière que pour les bobines d'induction connues, les éléments conducteurs magnétiques sont collés sur la face inférieure du support 3 dans les emplacements réservés à cet effet.

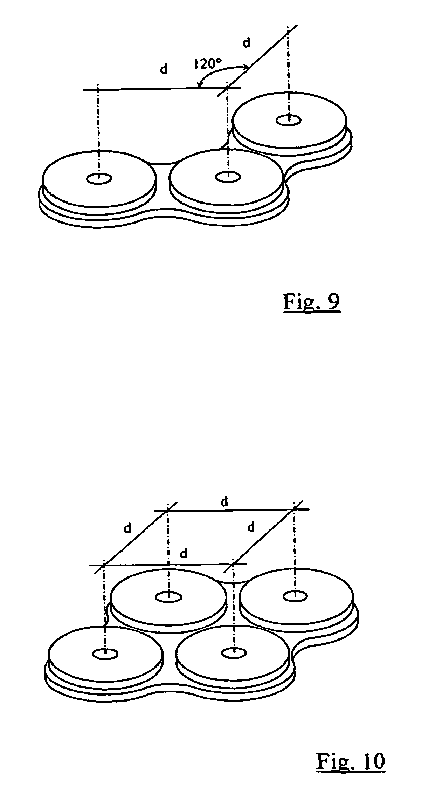

Les figures 9 et 10 montrent des formes alternatives des modules 1. En effet, il est possible de faire un module 1 de trois bobines d'induction 2 formant un angle de 120° comme illustré à la figure 9. Les centres des bobines d'induction 2 de trouvent alors sur les sommets d'un triangle isocèle dont les deux côtés de longueur identique ont pour longueur d et forment entre eux un angle de 120°. Il est encore possible de faire un module de quatre bobines d'induction 2 placées en losange comme illustré à la figure 10.

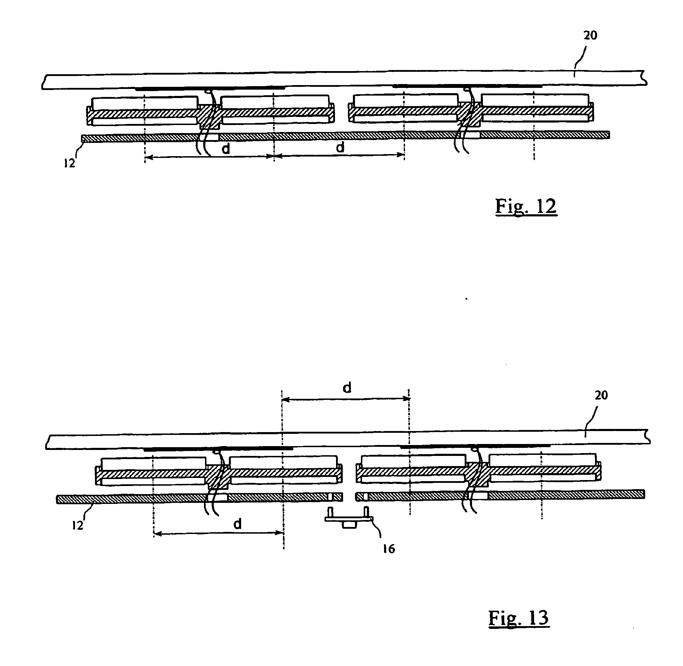

La figure 11 montre un dispositif d'assemblage préférentiel. Dans ce cas, les modules 1 utilisés sont des modules 1 de trois bobines d'induction 2. Les deux modules 1 sont placés tête bêche de sorte que les distances entre chaque centre de bobines d'induction 2 voisines soient sensiblement égales à d. Ces modules 1 sont placés sur des plaques support 12 comportant des trous dans lesquels les plots 14 des supports 3 se placent comme l'illustre la figure 12. Bien entendu, ces trous sont disposés préalablement pour correspondre à l'agencement de modules recherché.
Préférentiellement une plaque support 12 comporte trois modules 1 de trois bobines d'induction 2 en forme de trèfle.

Ainsi la zone de cuisson peut elle être formée de l'assemblage de plusieurs plaques support 12. La figure 13 illustre cet assemblage qui est réalisé grâce à une pièce 16 en forme de U dimensionnée pour assurer une distance d entre les centres de deux bobines d'induction 2 voisines.
Les plaques support 12, comme celle représentée à la figure 13, sont munies de trous supplémentaires pour laisser le passage des fils de connexion des bobines d'induction 2 ainsi qu'à ceux des capteurs de température 7 pour qu'ils puissent être tous connectés aux cartes générateurs (non représentées), classiquement associées à chaque bobine d'induction 2 et qui alimentent en courant les bobines d'induction 2.

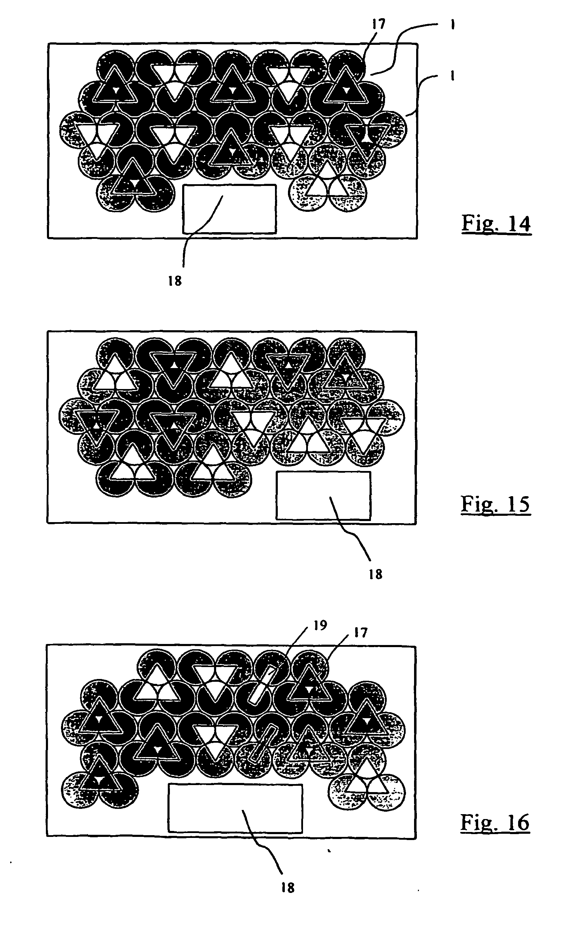

Un tel mode d'assemblage permet en outre de créer des zones de cuisson très variées. Les figures 14 à 16 donnent des exemples non limitatifs de formes de zone de cuisson réalisables.

La figure 14 montre le mode de réalisation préféré de l'invention. Dans ce cas, les modules 1 utilisés ne sont que des modules 1 de trois bobines d'induction 2 disposées en triangle 17. L'agencement proposé de ces douze modules 1 permet de créer une zone de cuisson où la répartition de puissance sera régulière tout en laissant une place centrale pour le positionnement du clavier de commande 18 de la zone de cuisson.

La figure 15 donne un agencement alternatif de ces mêmes douze modules 1 en laissant la place pour le clavier de commande dans un coin de la table.

La figure 16 montre un autre agencement alternatif des modules 1, mais dans ce cas des modules 1 de trois bobines d'induction 2 représentés par des triangles 17 et des modules 1 de deux bobines d'induction 2 représentés par des rectangles 19. Cet exemple montre la grande adaptabilité de la méthode d'assemblage objet de l'invention.

La présente invention permet de créer des zones de cuisson de chauffage par induction comprenant de nombreuses bobines d'induction 2 agencées régulièrement pour produire des champs magnétiques réguliers sur toute la surface de cuisson tout en étant simple à assembler industriellement.

## Revendications

1. Zone de cuisson permettant de chauffer par induction au moins un récipient de cuisson placé sur une plaque support amagnétique, ladite zone de cuisson étant formée d'au moins deux bobines d'induction (2) placées sous la plaque support et reliées à des générateurs indépendants, lesdites bobines d'induction (2) étant regroupées par modules (1) d'au moins deux bobines d'induction (2), et fixées sur un même support (3)
**caractérisée en ce que** chaque support (3) comprend une zone médiane concave (4) dont le rayon de courbure maximal est égal au rayon extérieur R de l'extrémité du module (1) et chaque support (3) est dimensionné pour que l'écart entre deux bobines d'induction (2) voisines et portées par des supports (3) distincts soit le même qu'entre deux bobines d'induction (2) voisines portées par un même support (3).

2. Zone de cuisson selon la revendication 1,
**caractérisée en ce que** des éléments conducteurs magnétiques, préférentiellement des ferrites, sont placés sous chaque bobine d'induction (2) et portés par le même support (3).

3. Zone de cuisson selon la revendication 1,
**caractérisée en ce que** chaque module (1) comporte un moyen (5) de mesure de la température du récipient recouvrant au moins partiellement ledit module (1).

4. Zone de cuisson selon la revendication 3,
**caractérisée en ce que** le moyen (5) de mesure de température comporte un capteur de température (7) délivrant une mesure de la température et un conducteur de la chaleur (6) placé en contact thermique avec le capteur de température (7) et qui s'étend au-dessus de chaque bobine d'induction (2).

5. Zone de cuisson selon la revendication 1,
**caractérisée en ce que** chaque bobine d'induction (2) a un diamètre extérieur compris entre 60 mm et 100 mm.

6. Zone de cuisson selon la revendication 5,
**caractérisée en ce que** le centre de chaque bobine d'induction (2) est espacé du centre de chaque bobine d'induction (2) voisine d'une distance d comprise entre 65 mm et 105 mm.

7. Zone de cuisson selon la revendication 6,
**caractérisée en ce que** la distance entre deux bobines d'induction (2) voisines est constante sur toute la zone de cuisson.

8. Zone de cuisson selon la revendication 1,
**caractérisée en ce qu'**elle comprend au moins une plaque support (12) sur laquelle est fixé au moins un module, de sorte que l'équidistance entre deux bobines d'induction (2) voisines soit garantie.

9. Zone de cuisson selon la revendication 8,
**caractérisée en ce que** chaque plaque support (12) est munie de trous de positionnement dans lesquels se placent les plots (14) correspondants des supports de modules (3).

10. Zone de cuisson selon la revendication 8 ou 9,
**caractérisée en ce que** chaque plaque support (12) est liée à au moins une plaque support (12) voisine par un moyen de liaison (16) garantissant l'équidistance entre deux bobines d'induction (2) voisines.

11. Zone de cuisson selon la revendication 1,
**caractérisée en ce que** les modules (1) sont constitués de deux bobines d'induction (2).

12. Zone de cuisson selon la revendication 1,
**caractérisée en ce que** les modules (1) sont constitués de trois bobines d'induction (2) disposées en triangle équilatéral.

13. Zone de cuisson selon la revendication 12,
**caractérisée en ce que** le capteur (5) de température du module est placé au centre du triangle équilatéral formé par les centres des bobines d'induction (2).

14. Zone de cuisson selon la revendication 1,
**caractérisée en ce que** les modules (1) sont constitués de trois bobines d'induction (2) positionnées sur les sommets d'un triangle isocèle, les côtés égaux de ce triangle ayant pour longueur d et formant entre eux un angle de 120°.

15. Zone de cuisson selon la revendication 1,
**caractérisée en ce que** les modules (1) sont constitués de quatre bobines d'induction (2) disposées en carré.

16. Zone de cuisson selon la revendication 1,
**caractérisée en ce que** les modules (1) sont constitués de quatre bobines d'induction (2) disposées en losange.

17. Zone de cuisson selon la revendication 1,
**caractérisée en ce que** ladite zone de cuisson comprend uniquement des modules (1) de trois bobines d'induction (2).

18. Zone de cuisson selon la revendication 1,
**caractérisée en ce que** ladite zone de cuisson comprend une combinaison de modules (1) de trois et de deux bobines d'induction (2).

## Claims

1. A cooking area making it possible to heat at least one cooking receptacle placed upon a non-magnetic support plate via induction, said cooking area being formed of at least two induction coils (2) placed below the support plate and connected to independent generators, said induction coils (2) being gathered into modules (1) of at least two induction coils (2) each, and fastened onto the same mount (3)
**characterized in that** each mount (3) comprises a median concave area (4) whose maximum radius of curvature is equal to the outer radius R of the end of the module (1), and **in that** each mount (3) is designed such that the gap between two adjacent induction coils (2) both supported on separate mounts (3) is the same as between two adjacent induction coils (2) both supported on the same mount (3).

2. A cooking area according to claim 1,
**characterized in that** magnetic conducting elements, preferentially ferritic ones, are placed below each induction coil (2) and are supported by the same mount (3).

3. A cooking area according to claim 1,
**characterized in that** each module (1) comprises a means (5) for measuring the receptacle's temperature which overlaps said module (1) at least partially.

4. A cooking area according to claim 3,
**characterized in that** the temperature measurement means (5) comprises a temperature sensor (7) delivering a temperature reading, and a heat conductor (6) placed in thermal contact with the temperature sensor (7) and which extends above each induction coil (2).

5. A cooking area according to claim 1,
**characterized in that** each induction coil (2) has an outer diameter between 60 mm and 100 mm.

6. A cooking area according to claim 5,
**characterized in that** the center of each induction coil (2) is separated from the center of each adjacent induction coil (2) by a distance d between 65 mm and 105 mm.

7. A cooking area according to claim 6,
**characterized in that** the distance between two adjacent induction coils (2) is constant over the entire cooking area.

8. A cooking area according to claim 1,
**characterized in that** it comprises at least one support plate (12) onto which at least one module is fastened, so that equal distance between two adjacent induction coils (2) is guaranteed.

9. A cooking area according to claim 8,
**characterized in that** each support plate (12) is fitted with positioning holes into which the corresponding studs (14) of the modules' mounts (3) are placed.

10. A cooking area according to claim 8 or 9,
**characterized in that** each support plate (12) is connected to at least one adjacent support plate (12) by a connecting means (16) guaranteeing an equal distance between two adjacent induction coils (2).

11. A cooking area according to claim 1,
**characterized in that** the modules (1) are made up of two induction coils (2).

12. A cooking area according to claim 1,
**characterized in that** the modules (1) are made up of three induction coils (2) disposed in an equilateral triangle arrangement.

13. A cooking area according to claim 12,
**characterized in that** the module's temperature sensor (5) is placed at the center of the equilateral triangle formed by the centers of the induction coils (2).

14. A cooking area according to claim 1,
**characterized in that** the modules (1) are made up of three induction coils (2) positioned at the peaks of an isosceles triangle, the equal sides of that triangle having length d and forming together a 120° angle.

15. A cooking area according to claim 1,
**characterized in that** the modules (1) are made up of four induction coils (2) disposed in a square arrangement.

16. A cooking area according to claim 1,
**characterized in that** the modules (1) are made up of four induction coils (2) disposed in a diamond arrangement.

17. A cooking area according to claim 1,
**characterized in that** said cooking area comprises only modules (1) of three induction coils (2).

18. A cooking area according to claim 1,
**characterized in that** said cooking area comprises a combination of modules (1) of three and of two induction coils (2).

## Patentansprüche

1. Kochzone zum Induktionserwärmen mindestens eines Kochbehälters auf einer nichtmagnetischen Trägerplatte, wobei die besagte Kochzone aus mindestens zwei unter der Trägerplatte angordneten und mit unabhängigen Generatoren verbundenen Induktionsspulen (2) besteht, wobei die besagten Induktionsspulen (2) in Baugruppen (1) mit mindestens zwei Induktionsspulen (2) gruppiert und auf einem selben Träger (3) befestigt sind,
**dadurch gekennzeichnet, dass** jeder Träger (3) einen konkaven Mittelbereich (4) umfasst, dessen maximaler Krümmungsradius gleich dem Außenradius R des Endes der Baugruppe (1) ist, und jeder Träger (3) derart dimensioniert ist, dass der Abstand zwischen zwei benachbarten und von verschiedenen Trägern (3) getragenen Induktionsspulen (2) derselbe ist wie zwischen zwei benachbarten, von einem selben Träger (3) getragenen Induktionsspulen (2).

2. Kochzone nach Anspruch 1,
**dadurch gekennzeichnet, dass** magnetisch leitende Elemente, vorzugsweise Ferrite, unter jeder Induktionsspule (2) angeordnet sind und auf demselben Träger (3) aufliegen.

3. Kochzone nach Ansprüche 1,
**dadurch gekennzeichnet, dass** jede Baugruppe (1) mit einem Mittel (5) zum Messen der Temperatur des Behälters, welcher mindestens teilweise die besagte Baugruppe (1) abdeckt, ausgestattet ist.

4. Kochzone nach Anspruch 3,
**dadurch gekennzeichnet, dass** das Mittel (5) zum Messen der Temperatur einen Temperatursensor (7), welcher eine Messung der Temperatur liefert, und einen mit dem Temperatursensor (7) in Kontakt stehenden und sich über jede Induktionsspule (2) erstreckenden Wärmeleiter (6) umfasst.

5. Kochzone nach Ansprüche 1,
**dadurch gekennzeichnet, dass** jede Induktionsspule (2) einen Außendurchmesser zwischen 60 mm und 100 mm aufweist.

6. Kochzone nach Anspruch 5,
**dadurch gekennzeichnet, dass** die Mitte jeder Induktionsspule (2) in einem Abstand von 65 mm bis 105 mm von der Mitte jeder benachbarten Induktionsspule (2) angeordnet ist.

7. Kochzone nach Anspruch 6,
**dadurch gekennzeichnet, dass** der Abstand zwischen zwei benachbarten Induktionsspulen (2) über die gesamte Kochzone hinweg konstant ist.

8. Kochzone nach Ansprüche 1,
**dadurch gekennzeichnet, dass** sie mindestens eine Trägerplatte (12) umfasst, auf welcher mindestens eine Baugruppe derart befestigt ist, dass die Äquidistanz zwischen zwei benachbarten Induktionsspulen (2) gewährleistet ist.

9. Kochzone nach Anspruch 8,
**dadurch gekennzeichnet, dass** jede Trägerplatte (12) mit Positionierungslöchern ausgestattet ist, um die entsprechenden Kontakte (14) der Baugruppenträger (3) aufzunehmen.

10. Kochzone nach Anspruch 8 oder 9,
**dadurch gekennzeichnet, dass** jede Trägerplatte (12) anhand eines Verbindungsmittels (16), welches die Äquidistanz zwischen zwei benachbarten Induktionsspulen (2) gewährleistet, mit mindestens einer benachbarten Trägerplatte (12) verbunden ist.

11. Kochzone nach Ansprüche 1,
**dadurch gekennzeichnet, dass** die Baugruppen (1) aus zwei Induktionsspulen (2) bestehen.

12. Kochzone nach Ansprüche 1,
**dadurch gekennzeichnet, dass** die Baugruppen (1) aus drei in einem gleichseitigen Dreieck angeordneten Induktionsspulen (2) bestehen.

13. Kochzone nach Anspruch 12,
**dadurch gekennzeichnet, dass** der Temperatursensor (5) der Baugruppe in der Mitte des von den Mitten der Induktionsspulen (2) gebildeten gleichseitigen Dreiecks angeordnet ist.

14. Kochzone nach Ansprüche 1,
**dadurch gekennzeichnet, dass** die Baugruppen (1) aus drei auf den Scheitelpunkten eines gleichschenkligen Dreiecks angeordneten Induktionsspulen (2) bestehen, wobei die gleichen Seiten dieses Dreiecks eine Länge d aufweisen und in einem Winkel von 120° zueinander stehen.

15. Kochzone nach Ansprüche 1,
**dadurch gekennzeichnet, dass** die Baugruppen (1) aus vier quadratisch angeordneten Induktionsspulen (2) bestehen.

16. Kochzone nach Ansprüche 1,
**dadurch gekennzeichnet, dass** die Baugruppen (1) aus vier rautenförmig angeordneten Induktionsspulen (2) bestehen.

17. Kochzone nach Ansprüche 1,
**dadurch gekennzeichnet, dass** die besagte Kochzone nur Baugruppen (1) mit drei Induktionsspulen (2) umfasst.

18. Kochzone nach Ansprüche 1,
**dadurch gekennzeichnet, dass** die besagte Kochzone eine Kombination aus Baugruppen (1) mit drei und mit zwei Induktionsspulen (2) umfasst.
